# EUROPEAN PATENT SPECIFICATION

(11) **EP 0 771 723 B1**
(45) Date of publication and mention of the grant of the patent: **31.01.2001**
(21) Application number: 96116517.2
(22) Date of filing: 15.10.1996
(51) Int. Cl.: B63B 21/08, F16G 11/10

(54) **A cleat**
Seilklemme
Taquet coinceur

(30) Priority: 01.11.1995 GB 9522393
(43) Date of publication of application: 07.05.1997
(73) Proprietor: RWO (Marine Equipment) Ltd., Benfleet Essex SS7 4QW (GB)
(72) Inventor: Owen, John Robert, Leigh-on-Sea, Essex SS9 2NA (GB)
(74) Representative: Frankland, Nigel Howard

(56) References cited:
- DE-A- 2 643 553
- GB-A- 2 263 726
- US-A- 3 795 218

## Description

**THE PRESENT INVENTION** relates to a cleat and more particulary relates to a cam cleat.

A cam cleat is frequently used to grip a rope. A typical cam cleat comprises a base, which may be horizonal, on which are mounted two cam elements. The cam elements may comprise mirror-images of each other. The cam elements may be mounted for rotation about spaced-apart respective vertical axes. One cam element may be spring biassed to rotate in a clockwise direction and the other element may be spring biassed to rotate in a counter-clockwise direction. Parts of the elements are thus brought into engagement. The region of each element forming the parts that is brought into engagement with the other element is toothed. A rope may be passed between the cam elements, forcing the cam elements apart against the spring bias. The toothed parts of the cam are thus biassed into contact with the rope, preventing movement of the rope, at least in a direction that would tend to bring the toothed parts of the cams closer together.

One prior proposed cam arrangement of this type comprises a base have two upstanding posts which define pivot axes for the cams, the base and the posts being formed of a strong plastics material. Each of the cam elements defines a vertical axially extending bore, and the bore receives a sleeve of a relatively soft self-lubricating material, the sleeve defining a central axially extending passage which receives one of the posts. The sleeve thus acts as a low-friction bearing for the cam element, the sleeve being located between the cam element and the post. The cam element itself is formed of a very strong plastics material. A disadvantage of a cleat of this type is that any force that is imparted to the cam element by a rope that is engaged by the cam element is transferred to the post through the relatively soft flexible plastic material of the sleeve that forms the bearing. The sleeve may thus become deformed. As the sleeve is deformed the cam element may move noticeably. This is undesirable since it may permit slippage of the rope gripped by the cleat.

US-A-3,975,218 discloses a cam cleat in which a base is provided with two upstanding posts, each post having a cam element pivotally mounted on it. A spring is provided, associated with each cam element, to impart a spring bias to the cam element. Each cam element has an outer shell made of stainless steel or other comparable strong, corrosion-resistant material. An opening is provided through the shell, a major portion of which is substantially cylindrical. The opening has a diameter which is much greater than the diameter of the post on the base. The outer shell is provided with teeth adapted to grip a rope. Each cam element includes an insert moulded of a strong impact-resistant plastic such as nylon. The insert is provided with a through-opening which is concentric with the opening formed in the shell. The opening formed in the insert is dimensioned to receive the post so that the cam may be rotatably mounted on the post.

The present invention seeks to provide an improved cleat.

According to this invention there is provided a cam cleat, said cam cleat comprising a base, the base carrying at least one post forming a pivot supporting a cam element, mounted on the post for rotation about the post, the cam element comprising an outer shell formed of a relatively hard durable material, the outer shell having a region defining a plurality of teeth or the like to grip a rope, the shell defining at least one further portion defining a first aperture, the cam element also comprising a plug, the plug defining an aperture of less diameter than that of the first aperture, the plug being connected to the shell with the aperture in the plug being co-aligned with said first aperture in the shell, the post passing through the aperture in the plug and the aperture in the shell, the material of the plug engaging the post, the material of the shell initially being separated from the post, means being provided to spring-bias the cam element to rotate in a predetermined sense, further means being provided to co-operate with the said cam element to grip a rope, wherein the plug is formed of relatively soft plastics material, and the diameter of the first aperture is slightly greater than the diameter of the post, the arrangement being such that when a force is applied to the cam element the plug may deform and the material of the shell will be brought into engagement with the post.

In a preferred embodiment of the invention the cleat is provided with an efficient bearing, but the cleat is such that if the cam elements are subjected to a load, the load is transferred directly from the strong plastic material forming the outer shell of each cam element to the post that is mounted on the base supporting the cam element.

Conveniently the said further means comprise a second cam, the second cam comprising a mirror-image of the first cam and being mounted on a second post carried by the base.

Preferably in the or each cam has a peg projecting therefrom, each peg passing through a respective arcuate aperture formed in the base of the cleat, spring means being provided to engage said peg and impart a spring bias to the cams.

Conveniently the shell comprises a second further portion, spaced from the first further portion, the second further portion defining therein an aperture of the same diameter of the aperture formed in the first further portion, the said plug being received between the two said further portions.

Preferably the aperture in the plug is defined by the inner ends of radially inwardly directed projected formed in an opening of larger diameter which extends through the plug.

Conveniently the material of the plug is of a different colour to the material forming the shell.

Preferably the plug is formed of acetal.

Conveniently the shell is formed with a carbon fibre filled plastics material.

In order that the invention may be more readily understood, and so that further features thereof may be appreciated, the invention will now be described by way of example, with reference to the accompanying drawings in which
FIGURE 1 is a perspective view of a cleat in accordance with the invention, viewed from the front.
FIGURE 2 is a perspective view of the cleat of figure 1, viewed from the rear,
FIGURE 3 is an exploded view of a cam assembly forming part of the cleat of figure 2,
FIGURE 4 is a view of the support base of the cleat of figures 1 and 2, and
FIGURE 5 is an underneath view of the operative parts of the cleat of figures 1 and 2.

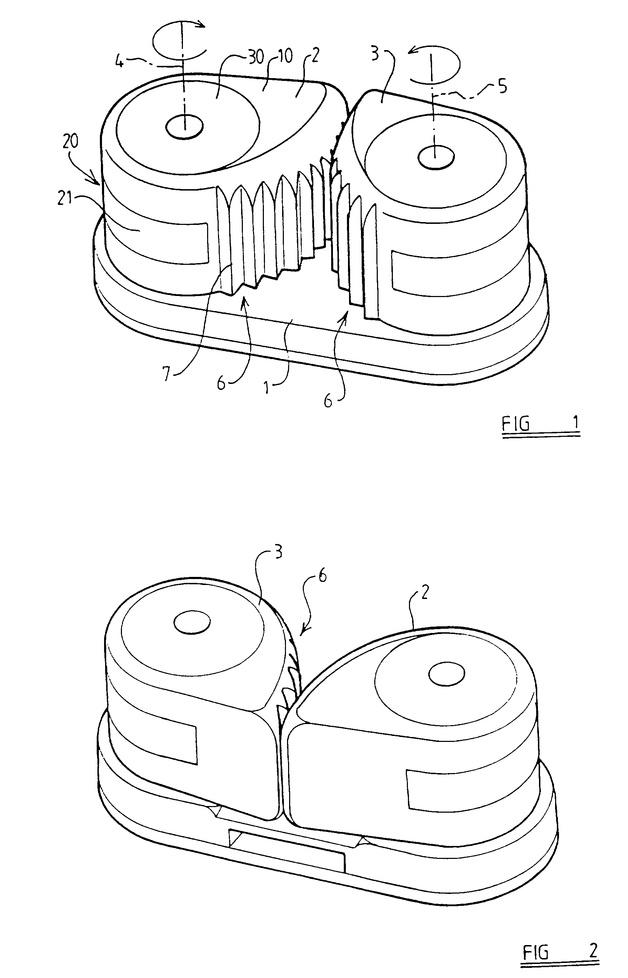

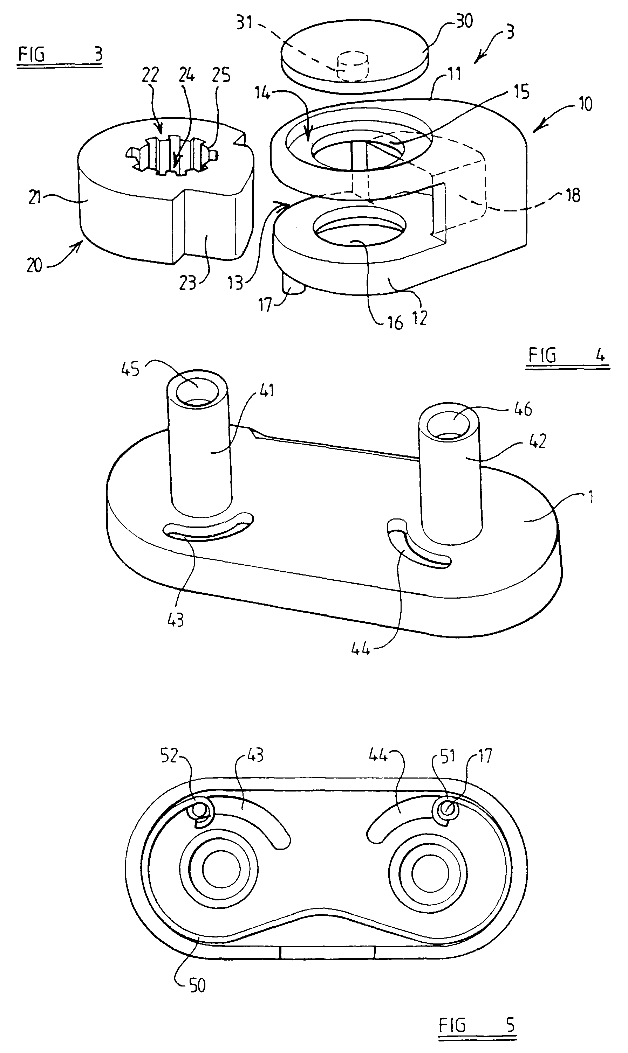

Referring initially to figures 1 and 2 a cam cleat comprises a base 1 on which are pivotally mounted two cam elements 2, 3. The cam elements are mounted for rotation about spaced-apart vertical axes 4, 5 which are identified by dotted lines. The cam element 2 is spring biassed to rotate in a clockwise direction, whereas the cam element 3 is spring biassed to rotate in a counter clockwise direction. The cam elements have regions 6 provided with teeth 7 which face each other and indeed, as can be seen from figure 1, in the initial position of the cleat, part of the regions 6 of the two elements are in contact with each other. A rope may be inserted between the two cam elements, forcing the cam elements apart by rotating the cam elements against the spring bias. The rope is then gripped by the teeth 7 provided on the cam elements.

As thus far described the cleat in conventional.

Figure 3 illustrates the structure of the cam element 3, although it is to be appreciated that the cam element 2 is simply a mirror-image version of the cam element 3. The cam element 3 comprises an outer shell 10 formed of a relatively strong and durable plastics material, such as a carbon fibre reinforced plastics material. Typically such a material is of a black or dark colour. The shell 10 defines the teeth 7. The shell 10 has an upper planar portion 11 and a lower planar portion 12, the upper portion 11 and the lower portion 12 being spaced apart, thus defining a gap 13.

The upper portion 11 defines a recess 14 in its upper surface, the recess 14 having a base which defines a central aperture 15, the aperture 15 having a diameter less than the diameter of the recess. The lower portion 12 defines an aperture 16. The apertures 15 and 16 are both circular and are both of the same diameter. A peg 17 projects downwardly from the undersurface of the lower planar portion 12. As can be seen in figure 3 the portion of the shell 10 that defines the teeth 7 is hollowed out from the interior, thus forming a cavity 18 that communicates with the gap 13.

A plug 20 is provided which is formed of a relatively soft plastics material, such as acetal. A plug 20 has an outer vertical face 21 which is part circular in plan, and two opposed parallel faces comprising an upper face 22 and a lower face (not shown in figure 3). One side of the plug is provided with a projection 23 and the plug defines a central vertically extending aperture 24. The aperture 24 is provided with radially inwardly extending projections 25 about is periphery.

The inner ends of the projections 25 lie on a circle, the circle having a diameter which is slightly less than the diameter of the apertures 15 and 16.

The plug 20 may be received in the gap 13 between the upper planar portion 11 and the lower planar portion 12 of the shell 10, with the projection 23 being received within the recess 18. The aperture 24 is then co-aligned with the apertures 15 and 16.

A cover disk 30 is provided which can be received within the recess 13. The disk has a downwardly extending projecting 31 on its under-surface.

As can be seen more clearly in figure 4 the base 1 supports two upstanding support or pivot posts 41, 42. The support or pivot posts 41,42 are hollow or tubular. The base 1 may be secured to a deck or other part of a yacht by screws which extend through the posts 41,42. The posts 41,42 are thus rigid, and can withstand the forces that are to be applied to them. The support posts 41, 42 have a diameter which is substantially equal to the diameter of the circle defined by the inner ends of the inwardly directed projections 25, and which is slightly less than the diameter of the apertures 15 and 16 formed respectively in the horizontally extending portions 11 and 12.

Adjacent each post 31, 32 is an arcuate aperture 42, 44, formed within the base.

It is to observed that a small recess 45, 46 is formed in the top of each post 41, 42.

The cam element 3 may be mounted on the post 42 simply by sliding the shell 10, assembled together with the plug 20, onto the post 42. The peg 17 is received within the arcuate aperture 44. The cover 30 may then be inserted into the recess 13. The projection 31 provided on the under surface of the cover 30 is frictionally received within the recess 46, thus securing the cam element 3 in position. The cam element 2 may be mounted in position in a similar manner.

Referring now to figure 5, a spring 50, is provided which is received within the hollow interior of the base 1, the spring having two opposed ends 51, 52. The end 51 engages the peg 17 present on the cam 3 and the end 52 engages the corresponding peg present on the other cam. The spring serves to bias the cam elements to the position shown in figures 1 and 2. The cam elements may move from this position with the cam element 2 moving in a counter clockwise direction as shown in figure 1 and with the cam element 3 moving in a clockwise direction as shown in figure 1, but this movement will move the peg 17 along the arcuate slot 34 and will move the other peg along the arcuate slot 33, stressing spring 40.

The plug 20 is formed of a soft or yieldable plastics material, such as an acetal material, which provides a low friction bearing function. Such material is relatively cheap and such material may be made brightly coloured.

Because the circle defined by the inner ends of the inwardly extending projections 25 is of a slightly lesser diameter than the diameter of the apertures 15 and 16, in the initial condition of the cleat the material forming the shell 10 is separated from the post of 31. The projection 25 engage the post, such as post 42, and provide a low friction bearing.

Should a force be applied to the cam 3, for example if severe tension is applied to a rope which is retained by the cleat illustrated in figures 1 and 2, then the relatively soft material forming the projections 25 may be deformed slightly. However, a slight deformation of the projections 25 will cause the material of the shell 10 that bounds the apertures 15 and 16 to brought into engagement with the post 42. There is thus, in this situation, direct contact between the shell 10 which is made of rigid durable strong plastic material, and the post 42.

It is to be understood that the shell 10 engages the post 42 after only an extremely slight, almost unnoticeable, movement of the shell 10, since the diameter of the apertures 15 and 16 is only very slightly greater than the diameter of the post 42. Thus the rope is gripped effectively.

It is to be appreciated, therefore, that the described cleat is provided with an efficient bearing, but is also such that if subjected to a load, the load is transferred directly from the strong plastic material forming the outer shell of each cam to the post that is mounted on the base.

A further advantage is experienced with the invention in that a substantial part of the exterior of each plug 20 (that is to say the face 21 as shown in figure 3) is visible from the exterior of the cleat. It is possible to manufacture plugs 20 from materials of different colours, and indeed it is also possible to manufacture the covers 30 from material of different colour. This enables the cleats to be easily colour-coded by using plugs of different colours. Where a large number of cleats are used adjacent one another, for example on a yacht or dinghy, it is often desirable to be able to identify a particular cleat. If the cleats are colour-coded with plugs of different colours, it is a very easy task to identity a particular cleat when necessary.

Whilst the invention has been described with reference to an example in which the cam cleat comprises two co-operating cam elements of mirror-image form it is to be appreciated that the invention may be applied to cam cleats of the type where single cam element co-operates with a fixed surface.

The features disclosed in the foregoing description, in the folowing Claims and/or in the accompanying drawings may, both separately and in any combination thereof, be material for realising the invention in diverse forms thereof.

## Claims

1. A cam cleat, said cam cleat comprising a base (1), the base carrying at least one post(41) forming a pivot supporting a cam element(3), mounted on the post for rotation about the post, the cam element(3) comprising an outer shell(10) formed of a relatively hard durable material, the outer shell having a region(6) defining a plurality of teeth(7) or the like to grip a rope, the shell defining at least one further portion(11) defining a first aperture(15), the cam element also comprising a plug(20), the plug defining an aperture(24) of less diameter than that of the first aperture, the plug(20) being connected to the shell(10) with the aperture(24) in the plug being co-aligned with said first aperture(15) in the shell (10), the post(41) passing through the aperture in the plug and the aperture in the shell, the material of the plug engaging the post, the material of the shell initially being separated from the post, means(50) being provided to spring-bias the cam element(3) to rotate in a predetermined sense, further means(2) being provided to co-operate with the said cam element(3) to grip a rope, characterised in that the plug(20) is formed of relatively soft plastics material, and the diameter of the first aperture(25) is slightly greater than the diameter of the post(41), the arrangement being such that when a force is applied to the cam element(3) the plug(20) may deform and the material of the shell(10) will be brought into engagement with the post(41).

2. A cleat according to Claim 1 wherein the said further means(2) comprise a second cam(2), the second cam comprising a mirror image of the first cam(3) and being mounted on a second post(42) carried by the base(1).

3. A cleat according to Claim 1 or 2 wherein the or each cam(2,3) has a peg(17) projecting therefrom, each peg passing through a respective arcuate aperture(43,44) formed in the bas(1) of the cleat, spring means(50) being provided to engage said peg and impart said spring bias to the cam.

4. A cleat according to any one of the preceding Claims wherein the shell comprises a second further portion(12), spaced from the first further portion(11), the second further portion(12) defining therein an aperture(16) of the same diameter as the said aperture(15) formed in the first further portion(15), the said plug(20) being received between the two said further portions.

5. A cleat according to any one of the preceding Claims wherein the aperture(24) in the plug(20) is defined by the inner ends of radially inwardly directed projections(25) formed in an opening of larger diameter which extends through the plug.

6. A cleat according to any one of the preceding Claims wherein the material of the plug(20) is of a different colour to the material forming the shell(10).

7. A cleat according to any one of the preceding Claims wherein the plug(20) is formed of acetal.

8. A cleat to any one of the preceding claims wherein the shell(10) is formed with a carbon fibre filled plastics material.

## Patentansprüche

1. Exzenter-Seilklemme, wobei die Exzenter-Seilklemme ein Sockelteil (1) umfaßt, und das Sockelteil zumindest eine Stütze (41) trägt, die ein Schwenklager bildet, welches ein Exzenterelement (3) abstützt, das auf der Stütze zur Drehung um die Stütze gehalten ist, wobei das Exzenterelement (3) ein äußeres Gehäuse (10) aufweist, das aus einem relativ harten, dauerhaften Material hergestellt ist, und das äußere Gehäuse einen Bereich (6) aufweist, der eine Anzahl von Zähnen (7) oder ähnlichem festlegt, um ein Seil zu erfassen, wobei das Gehäuse zumindest einen weiteren Bereich (11) festlegt, der eine erste Öffnung (15) bildet, wobei das Exzenterelement ferner ein Stopfenelement (20) aufweist und das Stopfenelement eine Öffnung (24) mit geringerem Durchmesser als der der ersten Öffnung festlegt, wobei das Stopfenelement (20) mit dem Gehäuse (10) verbunden ist, so daß die Öffnung (24) in dem Stopfenelement koaxial mit der ersten Öffnung (15) in dem Gehäuse (10) ausgerichtet ist, wobei die Stütze (41) durch die Öffnung in dem Stopfenelement und die Öffnung in dem Gehäuse hindurchgeht, das Material des Stopfenelements mit der Stütze zusammenwirkt, das Material des Gehäuses anfangs bzw. in einem Ausgangszustand von der Stütze getrennt ist, Mittel (50) vorhanden sind, um das Exzenterelement (3) zur Drehung in einer vorbestimmten Richtung federnd vorzuspannen, weitere Mittel (2) vorhanden sind, um mit dem Exzenterelement (3) zum Erfassen eines Seils zusammenzuwirken, dadurch gekennzeichnet, daß das Stopfenelement (20) aus einem rclativ weichen Kunststoffmaterial hergestellt ist und der Durchmesser der ersten Öffnung (25) geringfügig größer als der Durchmesser der Stütze (41) ist, und wobei die Anordnung so ist, daß wenn eine Kraft auf das Exzenterelement (3) aufgebracht wird, das Stopfenelement (20) sich verformen kann und das Material des Gehäuses (10) in Zusammenwirken mit der Stütze (41) gebracht wird.

2. Seilklemme nach Anspruch 1, dadurch gekennzeichnet, daß die weiteren Mittel (2) ein zweites Exzenterelement (2) umfassen, wobei das zweite Exzenterelement spiegelbidlich zu dem ersten Exzenterelement (3) ist und auf einer zweiten Stütze (42) gehalten ist, die von dem Sockelteil (1) getragen ist.

3. Seilklemme nach Anspruch 1 oder 2, dadurch gekennzeichnet, daß das oder jedes Exzenterelement (2, 3) einen von diesem vorstehenden Zapfen (17) aufweist, wobei jeder Zapfen durch eine entsprechende gebogene Öffnung (43, 44) hindurchgeht, die in dem Sokkelteil (1) der Seilklemme ausgebildet ist, wobei ein Federmittel (50) vorhanden ist, um mit dem Zapfen zusammenzuwirken und eine Federvorspannung auf das Exzenterelement aufzubringen.

4. Seilklemme nach einem der vorangehenden Ansprüche, dadurch gekennzeichnet, daß das Gehäuse einen zweiten weiteren Bereich (12) aufweist, der von dem ersten weiteren Bereich (11) beabstandet ist, wobei der zweite weitere Bereich (12) darin eine Öffnung (16) mit gleichem Durchmesser wie die in dem ersten weiteren Bereich (15) ausgebildete Öffnung (15) bildet, wobei das Stopfenelement (20) zwischen den beiden genannten weiteren Bereichen aufgenommen ist.

5. Seilklemme nach einem der vorangehenden Ansprüche, dadurch gekennzeichnet, daß die Öffnung (24) in dem Stopfenelement (20) durch die inneren Endabschnitte von in Radialrichtung nach innen weisenden Vorsprüngen (25) gebildet wird, die in einer Öffnung größeren Durchmessers ausgebildet sind, die sich durch das Stopfenelement hindurch erstreckt.

6. Seilklemme nach einem der vorangehenden Ansprüche, dadurch gekennzeichnet, daß das Material des Stopfenelements (20) eine unterschiedliche Farbe gegenüber dem das Gehäuse (10) bildenden Material aufweist.

7. Seilklemme nach einem der vorangehenden Ansprüche, dadurch gekennzeichnet, daß das Stopfenelement (20) aus Acetal besteht.

8. Seilklemme nach einem der vorangehenden Ansprüche, dadurch gekennzeichnet, daß das Gehäuse (10) unter Verwendung eines mit Kohlenstoffasern gefüllten Kunststoffmaterials hergestellt ist.

## Revendications

1. Taquet à came, ledit taquet à came comprenant une base (1), la base portant au moins un plot (41) formant un pivot supportant un élément de came (3) monté sur le plot pour la rotation autour de celui-ci, l'élément de came (3) comprenant une coquille extérieure (10) constituée par un matériau résistant relativement dur, la coquille extérieure présentant une région (6) définissant une pluralité de dents (7) ou analogues pour saisir un câble, l'enveloppe définissant au moins une autre position (11) définissant une première ouverture (15), l'élément de came comprenant également une douille (20), la douille définissant une ouverture (24) de diamètre inférieur à celui de la première ouverture, la douille (20) étant raccordée à la coquille (10) avec l'ouverture (24) dans la douille coalignée sur la première ouverture (15) dans la coquille 10, le plot (41) traversant l'ouverture dans la douille et l'ouverture dans la coquille, le matériau de la douille coopérant avec le plot, le matériau de la douille étant initialement séparé du plot, des moyens (50) étant prévus pour solliciter par ressort l'élément de came (3) pour tourner dans un sens prédéterminé, des moyens supplémentaires (2) étant prévus pour coopérer avec ledit élément de came (3) pour saisir un câble, caractérisé en ce que la douille (20) est constituée d'un matériau plastique relativement mou, et le diamètre de la première ouverture (25) est légèrement supérieur au diamètre du plot (41), l'agencement étant tel que lorsqu'une force est appliquée sur l'élément de came (3), la douille (20) peut se déformer et le matériau de la coquille (10) peut être mis en engagement avec le plot (41).

2. Taquet selon la revendication 1, dans lequel lesdits autres moyens (2) comprennent une seconde came (2) la seconde came constituant une image spéculaire de la première came (3) et étant montée sur un second plot (42) supporté par la base (1).

3. Taquet selon la revendication 1 ou 2, dans lequel la ou chaque came (2,3) présente une goupille (17) faisant saillie à partir de celui-ci, chaque goupille traversant une ouverture arquée respective (43,44) formée dans la base (1) du taquet, des moyens de ressort (50) étant prévus pour coopérer avec la goupille et transmettre ladite sollicitation par ressort à la came.

4. Taquet selon l'une quelconque des revendications précédentes, dans lequel la coquille comprend une seconde portion supplémentaire (12) espacée de la première portion supplémentaire (11), la seconde portion supplémentaire (12) définissant une ouverture (16) du même diamètre que la première ouverture (15) formée dans la première portion supplémentaire (15), ladite douille (20) étant logée entre les deux autres portions supplémentaires.

5. Taquet selon l'une quelconque des revendications précédentes, dans lequel l'ouverture (24) dans la douille (20) est définie par les extrémités internes des saillies dirigées radialement vers l'intérieur (25) formées dans une ouverture de plus grand diamètre qui s'étend à travers la douille

6. Taquet selon l'une quelconque des revendications précédentes, dans lequel le matériau de la douille (20) est de couleur différente au matériau constituant la coquille (10).

7. Taquet selon l'une quelconque des revendications précédentes, dans lequel la goupille (20) est constituée d'acétal.

8. Taquet selon l'une quelconque des revendications précédentes, dans lequel la goupille (10) est constituée par un matériau plastique rempli de fibres de carbone
